# EUROPEAN PATENT SPECIFICATION

(11) **EP 1 893 535 B1**
(45) Date of publication and mention of the grant of the patent: **11.11.2015**
(21) Application number: 06764431.0
(22) Date of filing: 15.06.2006
(51) Int. Cl.: C02F 1/28, B01D 39/06, C02F 103/06, C02F 101/10

(54) **METHOD FOR PREPARING A FILTER MATERIAL COMPRISING CALCIUM HYDROXIDE**
VERFAHREN ZUR HERSTELLUNG EINES FILTERMATERIALS ENTHALTEND CALCIUMHYDROXID
PRÉPARATION D'UN MATÉRIAU DE FILTRATION COMPRENANT DE L'HYDROXIDE DE CALCIUM

(30) Priority: 17.06.2005 FI 20050653
(43) Date of publication of application: 05.03.2008
(73) Proprietor: Maa- ja elintarviketalouden tutkimuskeskus, 03400 Vihti (FI)
(72) Inventor: PESONEN, Liisa, FI-03100 Nummela (FI); PASILA, Antti, FI-46960 Muhniemi (FI); TEYE, Frederick, FI-02920 Espoo (FI)
(74) Representative: Papula Oy
(86) International application number: PCT/FI2006/000205
(87) International publication number: WO 2006/134215

(56) References cited:
- EP-A1- 0 699 475
- WO-A1-99/24365
- DE-A1- 4 106 516
- JP-A- 9 308 877
- JP-A- 2001 047 037
- JP-A- 2004 121 908
- JP-A- 2005 103 522
- DATABASE WPI Week 198826 21 May 1988 (1988-05-21) Thomson Scientific, London, GB; AN 1988-179404 XP002694111, & JP 63 116798 A (ASAHI CHEM IND CO LTD) 21 May 1988 (1988-05-21)
- DATABASE WPI Week 200433, Derwent Publications Ltd., London, GB; Class D16, AN 2004-352588, XP003005370 & JP 2004 121908 A (AISIN TAKAOKA KK) 22 April 2004

## Description

The invention relates to a method for preparing a filter material.

### PRIOR ART

By the carry-over of phosphor from, for example, fields of farmers to waterbodies, like lakes and to the sea, considerable environmental problems occur. An excess phosphor content in the waterbody causes, for example, overfertilization of the waterbody.

It is previously known to form so-called protective zones for land areas, aiming to prevent the carry-over of phosphor carried by the surface water, for example, to lakes and the sea. The protective zone is, for example, an area located on a field, lining a lake, river or brook, and covered by hay-like vegetation. The aim of the protective zones is to diminish the detrimental carry-over of soil, nutrients and other harmful substances from, for example, fields to waterbodies and ground water.

In addition, the use of earth filters for processing effluents is previously known. The operation of an earth filter is based on the fact that the water to be purified passes through several layers of different materials, the impurities present in the water being bound to the material layers while the water is cleaned. A problem when using the earth filter is the rather complicated, expensive design thereof requiring a large area and, in particular, the poor binding of phosphor to filter layers.

From patent FI 113246, a filter granule prepared of burnt lime and/or dolomite and ferrous gypsum is known, used for removing phosphor compounds from waste water by filtering the waste water. A problem when using the filter granule is that, in contact with water, said filter granule softens changing its form, and the filter mass collapses. The water permeability of a collapsed filter mass is considerably decreased, wherein it does not remove the phosphor present in the water to be purified.

From JP2004121908 a method for preparing a filter material is known in which a lightweight aggregate is kneaded in the presence of calcium. This document does not specify how to ensure the generation of highly reactive particles that result from the binding of calcium to the lightweight aggregate.

Furthermore, it is previously known that by the presence of calcium in lightweight aggregate, a filter medium can be obtained probably retaining, i.e., removing phosphor from water.

Furthermore, a filter medium (Filtralite) is known having been used, for example, as bonding agent for biofilm in biological processes, and as a mechanical filter medium for the removal of particles. Moreover, the filter medium has been used in the nitrification process, in the pre-treatment and retreatment for removing nitrates as well as for the removal of punctiform organic material. Said filter medium has also been used in connection with an earth filter with lime mixed into the filter medium. However, especially when removing phosphor, the problem of the previously known filter medium has been that the calcium could not be bound to lightweight aggregate well enough but was washed away with the water to be filtered. In addition, the phosphor retention capacity of said filter medium is low and the dwell time of water to be purified is long in connection with said filter medium.

The present invention aims to eliminate the aforementioned drawbacks.

### SUMMARY OF THE INVENTION

The method according to the invention is characterised by what is said in the claims.

The invention is based on research work during which it was surprisingly found out that a highly effective filter material can be obtained for the removal of phosphor present in water, like leachate, for example drainage water, or in any water to be purified by using lightweight aggregate, calcium hydroxide and water for the preparation of the filter material, and, during the preparation of the filter material, by mixing these components by grinding. Surprisingly, the activity of the components used in preparing the filter material, could be increased by grinding thus obtaining calcium known to have the ability to bind phosphor, to get effectively bound with lightweight aggregate. Furthermore, by grinding a concrete-like structure was surprisingly obtained for the filter material rendering the filter material highly abrasion resistant. Also other components suitable for preparing the filter material can be used in preparing the filter material.

Phosphor means soluble phosphor, a phosphor compound and/or any other component containing phosphor, free and/or bound. In particular, phosphor means soluble phosphor.

Lightweight aggregate means, for example, Leca gravel (Light Expanded Clay Aggregates), LWA gravel (Light Weight Aggregates) and/or any other structure similar to lightweight aggregate.

Lightweight aggregate may be, for example, lightweight aggregate made of a Finnish clay quality being extremely light-weight and slowly-wetting.

The lightweight aggregate used for preparing the filter material may be dust of lightweight aggregate, crushed lightweight aggregate, granulated light-weight aggregate and/or any other lightweight aggregate particle depending on the field of use of the filter material. In accordance with the structure of the lightweight aggregate used, the filter material formed may be present, for example, in the form of a concrete-like mixture, in the form of filter granules and/or in any other form suitable for purifying water.

For preparing the filter material, 8 to 60% by weight of lightweight aggregate, 25 to 90 % by weight of calcium hydroxide, and 1 to 40 % by weight of water, preferably 10 to 50 % by weight of lightweight aggregate, 40 to 75 % by weight of calcium hydroxide, and 5 to 15 % by weight of water may be used.

The granular size, volume weight, phosphor retention capability and/or abrasion resistance of the filter material according to the present invention may be adjusted, depending on the field of application.

The granular size of the filter material may typically be 0.001 to 80 millimetres, preferably 0.05 to 50 millimetres and more preferably 2 to 20 millimetres, depending on the use of the filter material.

The volume weight of the filter material can be adjusted, for example, by changing the relation between the granular size of lightweight aggregate to be used, and the amount of filter surface formed thereon. The filter material may, for example, be floating, suspended, or it may be heavier than water. The volume weight of the filter material may be, for example, 200 to 1300 kg/m³, preferably 400 to 1000 kg/m³.

The phosphor retention capability, that is, the filter efficiency of the filter material can be adjusted, for example, by changing the specific area of the filter surface of the lightweight aggregate structure and, by changing the amount of free calcium in the filter material. When increasing the amount of free calcium in the filter material, it has to be noted that the concrete-likeness of the filter material thereby is diminished. The concrete-likeness of the filter material renders it highly durable against the abrading effect of flowing water. In other words, the phosphor retention capability of the filter material and the strength of the filter material are influenced by the amount of free calcium in the filter material.

The phosphor retention capability and the phosphor retention capacity of the filter material can further be improved by extending the dwell time of water to be purified in the filter material, and accordingly, by increasing the amount of filter material in the filter unit.

The filter material is prepared by a method according to claim 1.

A lightweight aggregate granule mixture means a mixture of whole lightweight aggregate granules having different sizes or the same size.

The crushed lightweight aggregate and/or the lightweight aggregate granule mixture may be wetted, for example, by submerging the crushed lightweight aggregate and/or the lightweight aggregate granule mixture in water or by adding water to the lightweight aggregate in order to fill the pores of the light-weight aggregate with water. After wetting the crushed lightweight aggregate and/or the lightweight aggregate granule mixture, the excess water can be removed, if desired, for example by letting it flow out and/or by drying. The crushed lightweight aggregate and/or the lightweight aggregate granule mixture can be screened for removing the excess water.

After having been wetted, the crushed light-weight aggregate and/or the lightweight aggregate granule mixture may be ground in order to activate the lightweight aggregate particles. Grinding means that lightweight aggregate and possibly other components are intensely mixed, for example, rubbed, ground by friction, ground by abrasion and/or in another way are intensely mixed for a time period long enough. As was stated above, the invention is based on the observation that by mixing the lightweight aggregate by grinding for a time period long enough, its particles are activated, for example, charged in a way allowing them to remarkably well react with the calcium hydroxide added to the lightweight aggregate, bonds being formed between the calcium and the lightweight aggregate particles. Furthermore, as a result of grinding, dust-like highly reactive particles loosen from the lightweight aggregate particles further contributing to the reaction between the calcium hydroxide and the lightweight aggregate. Crushed lightweight aggregate and/or the lightweight aggregate granule mixture can be ground in any mixer known as such in which grinding intense enough can be effected. Wetted crushed light-weight aggregate and/or lightweight aggregate granule mixture is ground for 5 to 30 minutes and preferably about 10 minutes. Grinding can be effected, for example, with a mixing speed of about 20 to 100 rpm, preferably about 50 rpm.

To the ground crushed lightweight aggregate and/or lightweight aggregate granule mixture, calcium hydroxide (Ca(OH₂) is added. By adding calcium hydroxide to lightweight aggregate wetted by water, a so-called alkali reaction occurs, the calcium hydroxide degrading to calcium ions and hydroxide ions, in turn leading to an increasing pH of the mixture. At a high pH (for example more than 10, preferably more than 12), the solid net-formed structure of the lightweight aggregate particles is degraded, wherein the calcium and lightweight aggregate react forming bonds. During the preparation of the filter material, the pH of the mixture formed has to be observed as a high pH contributes to the reactivity of the lightweight aggregate surface.

It is important to continue grinding in step c) long and/or intensely enough for the particles in the mixture to have enough time in order to get activated as a result of grinding and, to react with each other while forming bonds. In this stage, grinding is continued for 10 to 40 minutes, preferably for 25 to 30 minutes. As a consequence of grinding, the colour of the filter material turns from white to grey. The longer grinding will be continued, the harder the filter material will become. The phosphor retention capability of the filter material is effected by the hardness thereof. In other words, when defining the time needed for grinding, the use of the filter material has to be regarded. The time used for grinding depends further on the grinding intensity and the amount of the filter material prepared.

Furthermore, the method according to the invention may contain step d1) for drying a mixture of crushed lightweight aggregate and/or lightweight aggregate granule mixture and calcium hydroxide. Drying can be accomplished after and/or during step c). The mixture can be dried, for example, by heating the mixture in an oven, by means of an electric heater and/or a flame. The mixture can be heated at 70 to 1400°C, for example 70 to 240°C and/or 600 to 1400°C while simultaneously continuously or periodically stirring the mixture, if desired. Furthermore, drying can be effected by adding, after step c), calcium oxide (CaO) to the mixture while simultaneously stirring the mixture. After adding the calcium oxide, the mixture can further be heated, if desired, at 70 to 1400°C, for example, at 70 to 240°C and/or at 600 to 1400°C. By heating the filter material, the structure of the material is strengthened as the number of bonds between the calcium and the lightweight aggregate is increased.

The filter material can also be prepared according to the method presented below by using lightweight aggregate dust. A method for preparing the filter material in accordance with the invention can comprise the steps of:
a) grinding lightweight aggregate dust,
b) adding water to the ground lightweight aggregate dust while simultaneously continuing grinding,
c) adding calcium hydroxide to the mixture of lightweight aggregate dust and water while simultaneously continuing grinding.

By continuing grinding in step c) in a way defined above, a concrete-like filter material mixture is obtained allowing to be handled, for example, in the same way as a concrete-like material. In other words, the method further can include step d2) for the filter material mixture formed in step c) to be moulded in a mould having a predetermined form. If desired, the mixture moulded into the mould can further be dried at room temperature and/or at 70 to 1400°C, for example, 70 to 240°C, and/or 600 to 1400°C. The mixture formed in step c) also can be dried by adding calcium oxide to the mixture. In addition, the filter material mixture formed in step c) may be granulated as such. In other words, in the method, the filter material mixture from step c) and/or d2) may be dried, if desired.

The filter material obtained by the method of the present invention can be used in a filter cartridge. The filter cartridge can be, for example, a tube, a bag, a basket and/or another such structure which can be filled with filter material. The filter cartridge as such can be integrated, for example, as a part in a purification system. The filter cartridge can be placed, for example, in a well, a pool, a ditch, a tube and/or any other such place, where water shall be filtered in order to remove the phosphor contained therein.

The filter material obtained by a method according to the invention can be used, for example, for filtering waste water from scattered settlement, leachate, like drainage water and/or any water to be cleaned, in order to remove the phosphor contained in the water.

An advantage of the filter material obtained by a method according to the invention compared to prior art filter materials is its simple, easy-to-use, and more effective structure compared to prior art. In addition, the dwell time of the water to be cleaned is remarkably shorter in connection with the filter material according to the invention, (for example just from seconds to minutes) than in connection with several filter materials of prior art (from hours to days).

While using filter material obtained by a method according to the invention, there is no need for separate dosing of any reagents or controlling the dosing amount like, for example, in connection with postprecipitation.

Furthermore, the filter material obtained by a method according to the invention has the advantage of being usable in several filter cartridges having different forms. After a predetermined service life, the filter cartridges can be replaced by new ones in a simple and easy way. A further advantage is that following the filter operation, the filter material can be used, for example, for landscaping, it may be spread on fields or recirculated back to the preparation of lightweight aggregate.

A further advantage of the filter material obtained by a method according to the invention is that the structure thereof is highly resistant against the abrading effect of flowing water and compression, unlike several known prior art filter materials. Furthermore, it is an advantage that the structure and the characteristics of the filter material, like volume weight and phosphor retention capacity can be adjusted, for example, depending on the field of application, if necessary.

A further advantage is that the filter material can be prepared in large and small scale.

### LIST OF DRAWINGS

In the following, embodiments of the invention are described in more detail by reference to the accompanying drawings, in which
Fig. 1 shows a comparison between the change of pH of a filter material prepared by grinding in accordance with the invention, and the change of pH of a filter material prepared without grinding, and
Fig. 2 shows the result of the x-ray dispersion spectroscopy of a filter material according to the present invention (as a source for lightweight aggregate, crushed lightweight aggregate has been used).

### DETAILED DESCRIPTION OF THE INVENTION

### Example 1

For the preparation of the filter material, 0.71kg crushed lightweight aggregate (granular size 2 to 4.0mm), 0.76kg calcium hydroxide (Ca(OH)₂) and 0.25kg water was used. For drying, 0.46kg calcium oxide (CaO) was used.

The filter material was prepared by wetting the measured amount of crushed lightweight aggregate with water for about 30 minutes such that the pores at the surface of the crushed lightweight aggregate were filled with water. Following this, the excess water was allowed to run away. The wetted crushed light-weight aggregate was put into a mixer (e.g. Hobart 2000), and grinding of the crushed lightweight aggregate was started at a mixing speed of 50 rpm. Grinding was continued for about 10 minutes, during which time, small crushed lightweight aggregate particles were formed due to friction caused by grinding in the mixture, and the crushed lightweight aggregate was activated.

Following this, the calcium hydroxide was added to the wetted crushed lightweight aggregate while continuing grinding the mixture for about 25 to 30 minutes, whereupon bonds were formed between the calcium and the lightweight aggregate particles. Subsequently, calcium oxide was added in batches to the mixture and mixing by grinding was continued for another 20 minutes.

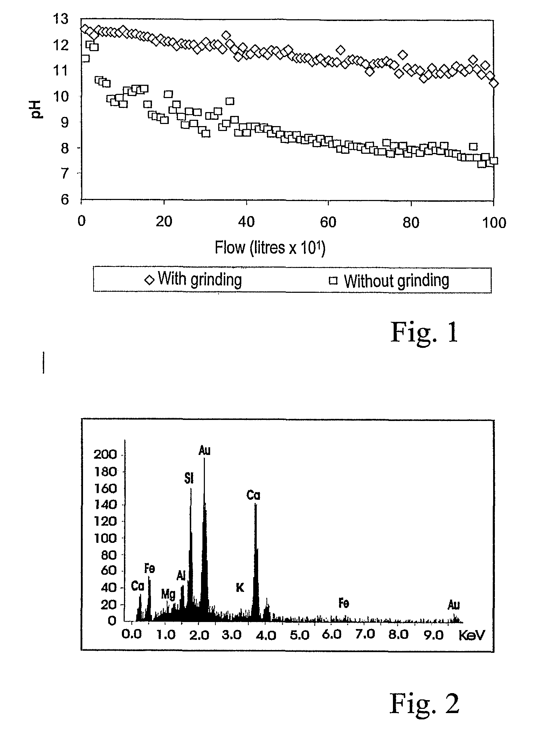

In Fig. 2, the x-ray dispersion spectroscopy spectrum for the filter material prepared in the manner presented above is shown. From Fig. 2, it can be seen that a filter material prepared by the method according to the present invention contains a great number of calcium bonds contributing to the abrasion resistance of the filter material. When a corresponding filter material was prepared without grinding, the number of calcium bonds was remarkably lower in the analysed filter material.

### Example 2

In order to prepare the filter material, 0.98kg lightweight aggregate dust (granular size 0 to 0.05mm), 3.36kg calcium hydroxide (Ca(OH)₂) and 0.39kg water was used.

The filter material was prepared by inserting the measured amount of lightweight aggregate dust into a mixer (for example Hobart 2000), and grinding of the lightweight aggregate dust was started at a mixing speed of 50rpm. The grinding was continued for about 10 minutes in which time the lightweight aggregate dust particles were activated by the friction due to grinding.

Following this, a measured amount of water was added to the lightweight aggregate dust while simultaneously continuing grinding for another 10 minutes after which time, furthermore, a measured amount of calcium hydroxide was added. After adding the calcium hydroxide, grinding was continued for about 25 to 30 minutes during which time a so-called concrete-like filter material mixture was formed.

After this, the concrete-like filter material mixture was moulded in a mould having a predetermined form after which the mixture was allowed to dry at room temperature.

### Tests and results

### Phosphor retention capability of the filter material

The phosphor retention capability of the filter material according to the invention was examined by using crushed lightweight aggregate as the source of lightweight aggregate. In the research, a filter column (height 50cm, diameter 10cm) filled with filter material according to the invention was used, filled from the upper end of the column and discharged from the lower end of the column. During a time period of two weeks, the filter column was filled every 4 hours with a 0,5mg/l PO₄-P solution (prepared using KH₂PO₄ and deionised water). The contact time was 4 hours. The samples were gathered from the discharged solution every 4 hours and were analysed. Based on the analysis, it was founded out that 90 to 100% of the phosphor present in the solution was removed by the filter material.

### Effect of grinding on the pH change of the filter material during use

Filter material prepared according to Example 1 was used in a test for comparing the meaning of grinding on the pH change of the filter material while filtering phosphor-containing water through the filter material. As a comparative example, a corresponding filter material was used, prepared without the use of grinding. The test result is presented in Fig. 1 from which it can be seen that the filter material according to the invention is exhibiting a clearly higher pH throughout the entire test than that of the comparative filter material. In the studies, it was found out that at a high pH, the phosphor retention capability of the filter material is even better. From Fig. 1, it can be seen that, at the end of the test, filter material prepared by grinding still has a very good phosphor retention capability. On the other hand, during the examination of filter material it was further found out that the filter material is capable of extremely well removing phosphor from water even when, following a long period of use, the pH has fallen near to neutral.

### Solubility of the filter material

The solubility of the filter material was examined by shaking the filter material for 24 hours in water. In a corresponding way, also a corresponding filter material, during the preparation of which no grinding had been employed, was shaken. After shaking, the amount of calcium dissolved in water was determined. In the study it was found out that, from the filter material prepared without grinding, an amount of calcium nearly twice the one of filter material prepared with grinding was dissolved (cf. the percentage by weight of the water soluble calcium = 0.93 for filter material prepared without grinding, and the percentage by weight of water-soluble calcium = 0.56 for filter material prepared by means of grinding). In other words, the filter material prepared by grinding was less water-soluble than the filter material prepared without grinding. That is, stronger bonds were obtained in the filter material which had been prepared by means of grinding, compared to filter material prepared without grinding.

In the course of additional tests, it was found out that when adding calcium hydroxide in excess, the strength of the filter material slightly weakens. This is to be noted when determining the amount of calcium hydroxide to be used during the preparation.

The invention is not limited only to the embodiments presented above but many modifications are possible in the scope of the inventive idea as stated by the accompanying claims.

## Claims

1. A method for preparing a filter material, **characterised in that** the method comprises the steps of:
a) wetting crushed lightweight aggregate and/or a lightweight aggregate granule mixture with water such that the pores of the lightweight aggregate are filled with water,
b) grinding the wetted crushed lightweight aggregate and/or lightweight aggregate granule mixture for 5 to 30 minutes with a mixing speed of 20-100 rpm,
c) adding calcium hydroxide to the ground crushed lightweight aggregate and/or lightweight aggregate granule mixture while simultaneously continuing grinding for 10 to 40 minutes.

2. A method according to claim 1, **characterised in that** the method further includes step d1) for drying the mixture formed of crushed lightweight aggregate and/or lightweight granule mixture and calcium hydroxide.

3. A method according to claim 1, **characterised in that**, in step c), grinding is continued preferably for 25 minutes to 30 minutes.

4. A method according to any one of claims 1 to 3, **characterised in that** while preparing the filter material, 8 to 60% by weight lightweight aggregate, 25 to 90% by weight calcium hydroxide and 1 to 40% by weight water, preferably 10 to 50% by weight light-weight aggregate, 40 to 75% by weight calcium hydroxide and 5 to 15% by weight water has been used.

5. A method according to any one of claims 1 to 4, **characterised in that** the granular size of the filter material is 0.001 to 80 millimetres, preferably 0.05 to 50 millimetres and more preferably 2 to 20 millimetres.

6. A method according to any of claims 1 to 5, **characterised in that** the volume weight of the filter material is 200 to 1300 kg/m³, preferably 400 to 1000 kg/m³.

## Patentansprüche

1. Ein Verfahren zur Herstellung eines Filtermaterials, **dadurch gekennzeichnet, dass** das Verfahren die Schritte umfasst:
a) Benetzung zerstoßener Leichtgewichtaggregate und/oder einer Leichtgewichtaggregate Granulat Mixtur mit Wasser in der Form, dass die Poren des Leichtgewichtaggregats mit Wasser gefüllt sind,
b) Zermahlen des benetzten, zerstoßenen Leichtgewichtaggregats und/oder der Leichtgewichtaggregat Granulat Mixtur für 5 bis 30 Minuten mit einer Mischgeschwindigkeit von 20 bis 100 Umdrehungen pro Minute,
c) Zusetzen von Kalziumhydroxid zu dem zerstoßenen, zermahlenen Leichtgewichtaggrcgat und/oder Leichtgewichtaggregat Granulat Mixtur bei gleichzeitigem weiteren Zermahlen für 10 bis 40 Minuten.

2. Ein Verfahren gemäß Anspruch 1 **dadurch gekennzeichnet, dass** das Verfahren weiter den Schritt d1) beinhaltet, zur Trocknung der Mixtur aus zerstoßenen Leichtgewichtaggregat und/oder Leichtgewicht Granulat Mixtur und Kalziumhydroxid.

3. Ein Verfahren gemäß Anspruch 1, **dadurch gekennzeichnet, dass** in Schritt c, das Zermahlen vorzugsweise für 25 bis 30 Minuten weiter geführt wird.

4. Ein Verfahren gemäß einem der Ansprüche 1 bis 3, **dadurch gekennzeichnet, dass** während der Herstellung des Filtermaterials 8 bis 60 %-Gewicht Leichtgewichtaggregat, 25 bis 90 %-Gewicht Kalziumhydroxid und 1 bis 40 %-Gewicht Wasser, vorzugsweise 10 bis 50 %-Gewicht Leichtgewichtaggregat, 40 bis 75 %-Gewicht Kalziumhydroxid und 5 bis 15 %-Gewicht Wasser verwendet wurde.

5. Ein Verfahren gemäß einem der Ansprüche 1 bis 4, **dadurch gekennzeichnet, dass** die Granulat Größe des Filtermaterials 0,001 bis 80 mm, vorzugsweise 0,05 bis 50 mm und weiter bevorzugt 2 bis 20 mm ist.

6. Ein Verfahren gemäß einem der Ansprüche 1 bis 5, **dadurch gekennzeichnet, dass** das Volumengewicht des Filtermaterials 200 bis 1300 kg/m³ ist, vorzugsweise 400 bis 1000 kg/m³.

## Revendications

1. Procédé de préparation d'un matériau filtrant, **caractérisé en ce que** le procédé comprend les étapes suivantes consistant à :
a) mouiller un agrégat léger concassé et/ou un mélange léger d'agrégats en granulés avec de l'eau de sorte que les pores de l'agrégat léger se remplissent d'eau,
b) moudre l'agrégat léger concassé et/ou le mélange léger d'agrégats en granulés mouillés pendant 5 à 30 minutes à une vitesse de mélange de 20 à 100 tpm,
c) ajouter de l'hydroxyde de calcium à l'agrégat léger concassé et/ou au mélange léger d'agrégats en granulés moulus tout en continuant simultanément à moudre pendant 10 à 40 minutes.

2. Procédé suivant la revendication 1, **caractérisé en ce que** le procédé comprend, en outre, l'étape d1) qui consiste à sécher le mélange formé d'un agrégat léger concassés et/ou d'un mélange de granulés légers et d'hydroxyde de calcium.

3. Procédé suivant la revendication 1, **caractérisé en ce qu'**à l'étape c), la mouture est continuée, de préférence, pendant 25 à 30 minutes.

4. Procédé suivant une quelconque des revendications 1 à 3, **caractérisé en ce qu'**au cours de la préparation du matériau filtrant sont utilisés 8 à 60% en poids d'agrégat léger, 25 à 90% en poids d'hydroxyde de calcium et 1 à 40% en poids d'eau, de préférence, 10 à 50% en poids d'agrégat léger, 40 à 75% en poids d'hydroxyde de calcium et 5 à 15% en poids d'eau.

5. Procédé suivant une quelconque des revendications 1 à 4, **caractérisé en ce que** la dimension de grain du matériau filtrant est de 0,001 à 80 millimètres, de préférence, de 0,05 à 50 millimètres et avantageusement, de 2 à 20 millimètres.

6. Procédé suivant une quelconque des revendications 1 à 5, **caractérisé en ce que** le poids volumique du matériau filtrant est de 200 à 1300 kg/m³, de préférence, de 400 à 1000 kg/m³.
